## Europäisches Patentamt
## European Patent Office
## Office européen des brevets

(19)

(11) Veröffentlichungsnummer: **0 129 800**
**B1**

(12)

# EUROPÄISCHE PATENTSCHRIFT

(45) Veröffentlichungstag der Patentschrift:
**18.10.89**

(21) Anmeldenummer: **84106873.7**

(22) Anmeldetag: **15.06.84**

(51) Int. Cl.⁴: **C 08 G 59/40, C 08 G 59/22,**
**C 08 L 63/02, C 08 G 18/58,**
**C 08 G 18/48, C 08 G 18/79,**
**H 01 B 3/40, H 01 B 3/30,**
**H 02 K 3/30**

(54) **Hitzehärtbare Reaktionsharzmischungen.**

(30) Priorität: **27.06.83 DE 3323153**

(43) Veröffentlichungstag der Anmeldung:
**02.01.85 Patentblatt 85/1**

(45) Bekanntmachung des Hinweises auf die Patenterteilung:
**18.10.89 Patentblatt 89/42**

(84) Benannte Vertragsstaaten:
**AT CH DE FR GB LI NL SE**

(56) Entgegenhaltungen:
**DE-B- 1 143 023**
**DE-B- 2 545 106**

(73) Patentinhaber: **Siemens Aktiengesellschaft,**
**Wittelsbacherplatz 2, D-8000 München 2 (DE)**

(72) Erfinder: **Markert, Helmut, Dr., Lohengrinstrasse 17,**
**D-8500 Nürnberg (DE)**
Erfinder: **Rogler, Wolfgang, Dr.,**
**Geschwister-Scholl-Strasse 4, D-8520 Erlangen (DE)**
Erfinder: **Kretzschmar, Klaus, Dr., Im Heuschlag 5,**
**D-8520 Erlangen (DE)**
Erfinder: **Bendel, Wolfgang, Dobelstrasse 58,**
**D-7250 Leonberg (DE)**

## Beschreibung

Die Erfindung betrifft hitzehärtbare Reaktionsharzmischungen, die polyfunktionelle Epoxide, polyfunktionelle Isocyanate und einen Reaktionsbeschleuniger sowie gegebenenfalls übliche Additive und/oder Füllstoffe enthalten, sowie die Verwendung derartiger Reaktionsharzmischungen.

In der Elektrotechnik spielen Epoxidharze, insbesondere säureanhydridhärtbare Epoxidharze, eine bedeutende Rolle, sie können nämlich – als lösungsmittelfreie Reaktionsharze – für viele Einsatzgebiete, insbesondere für Isolierzwecke, verwendet werden. Die aus den Epoxidharzen hergestellten Epoxidharzformstoffe besitzen sehr gute thermisch-mechanische Eigenschaften; der Temperaturbereich, in dem sie funktionstüchtig sein müssen, wird jedoch nach hohen und tiefen Temperaturen immer breiter. Dies erfordert Epoxidharzformstoffe mit verbesserter Temperaturwechselbeständigkeit bei gleichzeitig hoher Wärmeformbeständigkeit.

Es ist bekannt, daß sich die Temperaturwechselbeständigkeit von säureanhydridgehärteten Epoxidharzformstoffen durch Zugabe von Flexibilisatoren verbessern läßt (siehe beispielsweise: Henry Lee, Kris Neville «Handbook of Epoxy Resins», McCraw-Hill Book Company, 1967, Seite 16–1ff.). Häufig verwendete Flexibilisatoren sind beispielsweise Polyoxyalkylenglykole sowie Polyoxyalkylenglykolpolyglycidylether, die über OH- bzw. Epoxidfunktionen in das Polymernetzwerk eingebaut werden. Die Verbesserung der Temperaturwechselbeständigkeit durch Flexibilisierung mit Polyoxyalkylenglykolpolyglycidylethern bewirkt jedoch ein Absinken der notwendigen hohen Wärmeformbeständigkeit. Da säureanhydridhärtbare Epoxidharze darüber hinaus zum Aufbau von Isolierstoffen mit einer Dauerwärmebeständigkeit größer 155 °C wenig geeignet sind, ist die Entwicklung neuer Reaktionsharze mit hoher Wärmeform- und Dauerwärmebeständigkeit, bei gleichzeitig guten mechanischen Eigenschaften und guter Temperaturwechselbeständigkeit, erforderlich. Prinzipiell geeignet dafür wären Polyimidharze und Polyamidimidharze sowie Bismaleinimidharze. Diese Harze scheiden jedoch aus, da sie als lösungsmittelfreie niedrigviskose Harze nur schwer zugänglich sind. Auch die denkbaren Silicone sind ungeeignet, da sie – besonders bei erhöhter Temperatur – ungenügende mechanische Eigenschaften haben und auf Metalloberflächen ungenügend haften.

Als besonders wärmebeständig haben sich Formstoffe erwiesen, die aus Isocyanuratstrukturen (ICR) aufgebaut sind. Diese wärmebeständigen Heterocyclen entstehen, neben gleichfalls wärmebeständigen Oxazolidinonstrukturen (OX), bei der Härtung von Reaktionsharzmischungen aus Polyepoxiden und Polyisocyanaten (EP/IC-Harze). Die aus den EP/IC-Harzen herstellbaren, OX- und ICR-Ringe enthaltenden Formstoffe (OX/ICR-Formstoffe) besitzen eine hohe Wärmeformbeständigkeit. Die Wärmeformbeständigkeit dieser Formstoffe nimmt mit steigendem Gehalt an Isocyanuratringen zu; gleichzeitig nimmt jedoch auch die Sprödigkeit der entstehenden Formstoffe zu, d.h. die mechanischen Eigenschaften und die Temperaturwechselbeständigkeit werden schlechter. Bei der Verwendung von EP/IC-Harzen zur Herstellung von hochwärmebeständigen Isolierstoffen erweist sich deshalb die Temperaturwechselbeständigkeit bzw. die Rißfestigkeit der OX/ICR-Formstoffe als zu gering. Bei der Verwendung als Umgußharze für metallische Leiter wird die Rißanfälligkeit der OX/ICR-Formstoffe zusätzlich durch die große Differenz im linearen thermischen Ausdehnungskoeffizienten zwischen Metall und Harz erhöht. Wenn von den Rahmenbedingungen her möglich, kann diese Differenz durch Zugabe mineralischer Füllstoffe verringert werden, der verwendbare Füllstoffanteil wird jedoch durch die zunehmende Viskosität der Harzmischung sowie durch die Beeinträchtigung der mechanischen Eigenschaften begrenzt. In der Elektrotechnik besteht daher ein zunehmender Bedarf an hochwärmebeständigen polymeren Formstoffen, die gleichzeitig eine ausgezeichnete dauerhafte Temperaturwechselbeständigkeit und gute mechanische Eigenschaften besitzen.

Aufgabe der Erfindung ist es, hitzehärtbare Reaktionsharzmischungen auf der Basis von polyfunktionellen Epoxiden und polyfunktionellen Isocyanaten bereitzustellen, welche die Herstellung von hochwärmebeständigen Formstoffen erlauben, die gleichzeitig eine hohe Temperaturwechselbeständigkeit und gute mechanische Eigenschaften besitzen.

Dies wird erfindungsgemäß dadurch erreicht, daß die Reaktionsharzmischungen Gemische von Polyoxyalkylenglykolpolyglycidylethern mit anderen polyfunktionellen Epoxiden enthalten.

Überraschenderweise hat sich nämlich gezeigt, daß sich Formstoffe mit den – auf dem Gebiet der Elektrotechnik – geforderten Eigenschaften dann herstellen lassen, wenn von EP/IC-Harzen ausgegangen wird, d.h. von Reaktionsharzmischungen aus Polyepoxiden und Polyisocyanaten, und zwar dann, wenn die EP/IC-Harze – als Polyepoxid-Komponente – neben (anderen) polyfunktionellen Epoxiden Polyoxyalkylenglykolpolyglycidylether enthalten; bei der Härtung entstehen dann OX/ICR-Formstoffe.

Die hervorragenden mechanischen Eigenschaften der aus den erfindungsgemäßen Reaktionsharzmischungen hergestellten OX/ICR-Formstoffe, bei gleichzeitiger hoher Wärmeformbeständigkeit, lassen sich durch die Ausbildung eines Zweiphasensystems erklären. REM-Aufnahmen zeigen nämlich eine OX/ICR-Matrix mit einer darin feindispers verteilten elastifizierenden Polyoxyalkylenglykol-Phase. Dieses Ergebnis ist überraschend, weil von säureanhydridhärtbaren Epoxidharzen, wie bereits ausgeführt, bekannt ist, daß Polyoxyalkylenglykole bzw. Polyoxyalkylenglykolpolyglycidylether als normale Flexibilisatoren wirken, die zwar die Temperaturwechselbeständigkeit verbessern, jedoch auf Kosten einer stark verminderten Wärmeformbeständigkeit. Die in EP/IC-Harzen festgestellte elastifizierende Wirkung – unter Beibehaltung einer hohen Wärmeformbeständigkeit – durch Ausbildung eines Zweiphasensystems, wie dies insbesondere bei Polyoxybutylenglykolbisglycidylether der Fall ist, konnte daher nicht vorhergesehen werden. Bei der Verwendung von Polyoxypropylenglykolbisglycidylether beispielsweise wird zwar, wie REM-Aufnahmen zeigen, kein so deutlich ausgeprägtes Zweiphasensystem gebildet, die entsprechenden OX/ICR-Formstoffe weisen aber – bei sehr guten mechanischen Eigenschaften – ebenfalls eine hohe Wärmeformbeständigkeit auf.

Aus der DE-AS 2 545 106 und der DE-AS 2 746 789 sind OX/ICR-Formstoffe mit verbesserter Temperaturwechselbeständigkeit und Rißfestigkeit bekannt, die durch Modifizierung mit – von säureanhydridgehärteten Epoxidformstoffen her bekannten – Elastifizierungsmitteln erhalten werden. Diese Elastifizierungsmittel, nämlich Polyglycidylester von Fettsäuren bzw. α,ω-funktionelle Copolymere aus Butadien und Acrylnitril, sind jedoch mit EP/IC-Harzen unverträglich und bereiten bei der Verarbeitung der Harze Probleme. Die in den erfindungsgemäßen Reaktionsharzmischungen enthaltenen Polyoxyalkylenglykolpolyglycidylether sind im Gegensatz dazu mit den EP/IC-Harzen mischbar, wodurch sich die Verarbeitung dieser Systeme wesentlich einfacher gestaltet.

OX/ICR-Formstoffe, die durch Vernetzung von mit Polyoxyalkylenglykolpolyglycidylethern modifizierten EP/IC-Harzen hergestellt wurden, eignen sich – aufgrund der hohen Wärmeformbeständigkeit und Temperaturwechselbeständigkeit sowie der guten mechanischen und elektrischen Eigenschaften – in hervorragender Weise für viele Einsatzgebiete in der Elektrotechnik. So können mit diesen EP/IC-Harzen beispielsweise elektrische Wicklungen für rotierende Maschinen und Transformatoren imprägniert oder vergossen und zu Isolierungen der Isolierstoffklassen F und H mit hervorragender Temperaturwechselbeständigkeit vernetzt werden. Die erfindungsgemäßen Reaktionsharzmischungen eignen sich in ausgezeichneter Weise auch zur Herstellung von mechanisch hochfesten Isolierbauteilen, wie Isolatoren, Halte- und Stützelemente sowie Durchführungen in der Schaltungs- und Energieübertragungstechnik. Ein weiteres bevorzugtes Anwendungsgebiet ist die Einbettung und Umhüllung von thermisch hochbelastbaren elektronischen Bauteilen, beispielsweise für die Automobiltechnik.

Die in den erfindungsgemäßen Reaktionsharzmischungen enthaltenen Polyoxyalkylenglykolpolyglycidylether sind im Handel erhältlich, sie können aber auch nach bekannten Verfahren hergestellt werden, beispielsweise durch Glycidylisierung von Polyoxyalkylenpolyolen mit Epichlorhydrin. Die dazu erforderlichen Polyoxyalkylenpolyole sind ebenfalls im Handel erhältlich, sie werden häufig zur Bildung von Weichsegmenten in Polyurethanen eingesetzt. Die Polyoxyalkylenpolyole können aber auch durch Homo- bzw. Copolymerisation von cyclischen Ethern, wie Ethylenoxid, Propylenoxid, Styroloxid und Tetrahydrofuran, hergestellt werden. Auch durch Addition von Alkylenoxiden an verschiedene Glykole lassen sich Polyoxyalkylenglykole herstellen, während durch Addition von Alkylenoxiden an höherfunktionelle Polyole höherfunktionelle Polyoxyalkylenpolyole entstehen. Alle genannten Polyole lassen sich dann beispielsweise mit Epichlorhydrin glycidylisieren.

Beispiele für in den erfindungsgemäßen Reaktionsharzmischungen einsetzbare Polyoxyalkylenglykolpolyglycidylether sind:
Polyoxyethylenglykolbisglycidylether,
Polyoxypropylenglykolbisglycidylether,
Copolyoxyethylenoxypropylenglykolbisglycidylether,
Polyoxybutylenglykolbisglycidylether,
der Diglycidylether des durch Addition von Propylenoxid an Neopentylglykol erhaltenen Glykols und der Triglycidylether des durch Addition von Propylenoxid an Trimethylolpropan erhaltenen Triols. Eine besonders geeignete Epoxidkomponente stellt dabei der Polyoxybutylenglykolbisglycidylether dar.

In den erfindungsgemäßen EP/IC-Harzmischungen werden im allgemeinen Polyoxyalkylenglykolpolyglycidylether mit einer mittleren Molmasse von 400 bis 2000, vorzugsweise 600 bis 1200, eingesetzt. Liegt die mittlere Molmasse über 2000, so steigt die Viskosität der Epoxidharzmischungen stark an und beeinflußt in negativer Weise die Verarbeitbarkeit vor allem füllstoffhaltiger Reaktionsharze. Liegt die mittlere Molmasse unter 400, so nähert man sich dem Bereich der reaktiven Verdünner, die als innere Weichmacher wirken und die Wärmeformbeständigkeit drastisch verschlechtern.

Zur Erzielung guter Formstoffeigenschaften, insbesondere einer hohen Wärmeformbeständigkeit und einer hohen Dauerwärmebeständigkeit, beträgt der Anteil des Polyoxyalkylenglykolpolyglycidylethers in der Epoxidharzmischung 10 bis 60 Gew.-%, vorzugsweise 20 bis 50 Gew.-%.

Das Ansatzmolverhältnis der Epoxid- und Isocyanatgruppen (EP : IC) in den erfindungsgemäßen Reaktionsharzmischungen ist vorzugsweise < 1, es kann aber auch ein Ansatzmolverhältnis > 1 verwendet werden.

Als Polyepoxide sind relativ niedrigviskose aliphatische, cycloaliphatische oder aromatische Epoxide sowie deren Mischungen besonders gut geeignet. Bevorzugt einsetzbar sind
Bisphenol-A-diglycidylether,
Bisphenol-F-diglycidylether,
3,4-Epoxycyclohexylmethyl-3′,4′-epoxycyclohexancarboxylat und
Polyglycidylether von Phenol/Formaldehyd- bzw. Kresol/Formaldehyd-Novolak sowie Diglycidylester von Phthal-, Isophthal- oder Terephthalsäure. Weitere verwendbare Polyepoxide sind beispielsweise
hydrierte Bisphenol-A- bzw.
Bisphenol-F-diglycidylether,
Hydantoinepoxidharze,
Triglycidylisocyanurat,
Triglycidyl-p-aminophenol,
Tetraglycidyldiaminodiphenylmethan.

Tetraglycidyldiaminodiphenylether und
Tetrakis(4-glycidoxyphenyl)-ethan
sowie Epoxide, welche im «Handbook of Epoxy
Resins» von Henry Lee und Kris Neville, McGraw-
Hill Book Company, 1967, und in der Monographie
von Henry Lee «Epoxy Resins», American Chemical Society, 1970, beschrieben sind.

Als Polyisocyanate sind relativ niedrigviskose
aliphatische, cycloaliphatische oder aromatische
Isocyanate sowie deren Mischungen besonders
gut geeignet. Bevorzugt werden Isomerengemische aus 4,4'- und 2,4'-Diphenylmethandiisocyanat, polyolmodifizierte Polyisocyanate und Gemische von flüssigen Polyisocyanaten mit höhermolekularen Polyisocyanaten oder Carbodiimid-
Polyisocyanaten eingesetzt. Weitere verwendbare Polyisocyanate sind beispielsweise
Hexan-1,6-diisocyanat,
Cyclohexan-1,3-diisocyanat und Isomere davon,
4,4'-Dicyclohexylmethandiisocyanat,
3-Isocyanatomethyl-3,5,5-trimethylcyclo-
   hexylisocyanat,
1,3-Dimethylbenzol-ω,ω'-diisocyanat
   und Isomere,
1-Methylbenzol-2,4-diisocyanat und Isomere,
Naphthalin-1,4-diisocyanat,
Diphenylether-4,4'-diisocyanat und Isomere,
Diphenylsulfon-4,4'-diisocyanat und Isomere
sowie tri- oder höherfunktionelle Isocyanate,
wie 3,3',4,4'-Diphenylmethantetraisocyanat.
Ferner können auch Isocyanate verwendet werden, die in üblicher Weise mit Phenol oder Kresol
maskiert sind. Dimere und Trimere der genannten
mehrwertigen Isocyanate sind ebenfalls einsetzbar. Derartige Polyisocyanate besitzen endständige freie Isocyanatgruppen und enthalten einen
oder mehrere Uretdion- und/oder Isocyanuatringe. Verfahren zur Herstellung verschiedener Arten solcher Trimerer und Uretdione sind beispielsweise in den US-Patentschriften 3 494 888,
3 108 100 und 2 977 370 beschrieben.

Die EP/IC-Harze können auch Komponenten
enthalten, die im allgemeinen an den chemischen
Reaktionen, die zu den OX/ICR-Formstoffen führen, nicht beteiligt sind. Als derartige Füllstoffe
eignen sich mineralische und faserförmige Füllstoffe, wie Quarzmehl, Quarzgut, Aluminiumoxid,
Glaspulver, Glimmer, Kaolin, Dolomit, Graphit
und Ruß sowie Kohlefasern, Glasfasern und Textilfasern. Farbstoffe, Stabilisatoren und Haftvermittler sowie andere Additive üblicher Art können
den EP/IC-Harzen ebenfalls zugesetzt werden.

Für die erfindungsgemäßen EP/IC-Harze spielen die bei der Vernetzung die OX- und ICR-Ringbildung fördernden Reaktionsbeschleuniger bzw.
(Härtungs-)Katalysatoren eine bedeutende Rolle.
Als derartige Katalysatoren sind Amine, bevorzugt tert. Amine und Imidazole, besonders geeignet. Beispiele für tert. Amine sind
Tetramethylethylendiamin,
Dimethyloctylamin,
Dimethylaminoethanol,
Dimethylbenzylamin,
2,4,6-Tris(dimethylaminomethyl)-phenol,
N,N'-Tetramethyldiaminodiphenylmethan,

N,N'-Dimethylpiperazin,
N-Methylmorpholin,
N-Methylpiperidin,
N-Ethylpyrrolidin,
1,4-Diazabicyclo(2,2,2)-octan und Chinoline.
Geeignete Imidazole sind beispielsweise
1-Methylimidazol,
2-Methylimidazol,
1,2-Dimethylimidazol,
1,2,4,5-Tetramethylimidazol,
1-Benzyl-2-phenylimidazol,
2-Undecylimidazol,
2-Heptadecylimidazol,
2-Ethyl-4-methylimidazol,
1-Cyanoethyl-2-ethyl-4-methylimidazol,
1-Cyanoethyl-2-phenylimidazol und
1-(4,6-Diamino-s-triazinyl-2-ethyl)-2-phenylimidazol.

Als Härtungskatalysatoren für die EP/IC-Harze
eignen sich ferner Oniumsalze, bevorzugt Oniumsalze mit N oder P als Zentralatom. Beispiele für
verwendbare Oniumsalze sind:
Tetraethylammoniumchlorid,
Tetraethylammoniumbromid,
Octyltrimethylammoniumchlorid,
Benzyltrimethylammoniumchlorid,
Tetrabutylphosphoniumbromid,
N-Ethylmorpholiniumbromid,
2-Ethyl-4-methylimidazoliumbromid,
N-Ethylmorpholiniumtetraphenylborat,
1,2-Dimethylimidazoliumtetraphenylborat und
Tetrabutylammoniumtetraphenylborat.

Die genannten Katalysatoren führen bei der
thermischen Härtung der erfindungsgemäßen EP/
IC-Harze, die vorzugsweise bei Temperaturen bis
220 °C erfolgt, zu mechanisch-thermisch hochwertigen OX/ICR-Formstoffen. Sie katalysieren die
Härtungsreaktion allerdings schon bei niederen
Temperaturen und führen so zu einer relativ kurzen Gebrauchsdauer, was die Verarbeitung der
Reaktionsharze erschweren kann. Bevorzugt werden in den erfindungsgemäßen EP/IC-Harzmischungen daher latente Härtungskatalysatoren
eingesetzt, die bei niederen Temperaturen eine
ausreichende Gebrauchsdauer gewährleisten.
Als derartige Katalysatoren, die auch als latente
Reaktionsbeschleuniger bezeichnet werden, eignen sich insbesondere Additionskomplexe von
Bortrihalogeniden mit tert. Aminen und Imidazolen, beispielsweise die in der DE-PS 2 655 367
beschriebenen Additionskomplexe von Bortrichlorid und tert. Aminen der allgemeinen Formel
$BCl_3 \cdot NR^1R^2R^3$, in der $R^1$, $R^2$ und $R^3$ gleiche oder
verschiedene aliphatische, aromatische, heterocyclische oder arylaliphatische Reste sind, die
paarweise auch Bestandteil von heterocyclischen
Ringen sein können. Geeignet sind auch die analogen Komplexe des Bortrifluorids der Formel
$BF_3 \cdot NR^1R^2R^3$, wobei $R^1$, $R^2$ und $R^3$ die vorstehend
angegebene Bedeutung haben. Spezielle Beispiele für geeignete tert. Amine der $BF_3$- und $BCl_3$-
Komplexe sind Octyldimethylamin und Dimethylbenzylamin. Auch Morpholinverbindungen und
Imidazole, insbesondere N-Methylmorpholin, N-
Ethylmorpholin, 1,2-Dimethylimidazol und 1-Benzyl-2-phenylimidazol, sind zur Bildung von $BCl_3$- bzw. $BF_3$-Komplexen geeignet.

Eine Verlängerung der Gebrauchsdauer der erfindungsgemäßen EP/IC-Harze kann auch dann erreicht werden, wenn als latente Katalysatoren tert. Amine oder Imidazole verwendet werden, die durch Zusatz von Elektronenakzeptoren desaktiviert sind. Geeignete Elektronenakzeptoren sind beispielsweise 7,7,8,8-Tetracyanochinodimethan, 2,3-Dichlor-5,6-dicyanobenzochinon und 2,3,5,6-Tetrachlorbenzochinon.

Der Gehalt des Härtungskatalysators in den EP/IC-Harzen beträgt vorteilhaft 0,01 bis 5 Gew.-%, vorzugsweise 0,25 bis 2,5 Gew.-%, bezogen auf die Masse der Harzmatrix. Durch die Art und durch die Konzentration des Härtungskatalysators kann dabei die Härtungstemperatur und die Härtungsdauer beeinflußt werden.

Anhand von Ausführungsbeispielen soll die Erfindung noch näher erläutert werden.

Beispiele 1 bis 3

Ein Novolak-Epoxidharz (Harz A, Ep-Wert = $0,57 \frac{mol}{100\ g}$, $\eta_{50°C}$ = 2200 mPa · s) wird zusammen mit einem Polyoxybutylenglykolbisglycidylether (Harz B, Ep-Wert = $0,24 \frac{mol}{100\ g}$, $\eta_{25°C}$ = 190 mPa · s), einem bei Raumtemperatur flüssigen Isomerengemisch von Diisocyanatodiphenylmethan (MDI, IC-Wert = $0,79 \frac{mol}{100\ g}$, $\eta_{25°C}$ = 15 mPa · s) und 65% Quarzmehl (16 900 M(cm²) gemischt und während 1 h bei 80°C/1 mbar unter Rühren entgast. Anschließend wird auf 60°C abgekühlt, der Reaktionsbeschleuniger (RKB), beispielsweise $BCl_3$ · DMBA ($BCl_3$-Addukt von Dimethylbenzylamin), zugegeben und bei 60°C/1 mbar eine weitere Stunde entgast. Die Zusammensetzung der Reaktionsharzmischungen ist in Tabelle 1 angegeben. Die Reaktionsharzmischungen werden im Vakuum in auf 100°C vorgeheizte Formen gegossen und während 4 h bei 140°C und 16 h bei 200°C zu Formstoffen gehärtet. An den so hergestellten Formstoffen wurde nach DIN 53 453 die Schlagzähigkeit (SZ), nach DIN 53 452 die Biegefestigkeit (BF) und nach DIN 53 458 die Wärmeformbeständigkeit nach Martens ($T_M$) bestimmt. Die erhaltenen Werte sind in Tabelle 2 zusammengefaßt.

Tabelle 1

Zusammensetzung der Reaktionsharzmischungen (MT = Masseteile)

| Beispiel | Harz A MT | Harz B MT | MDI MT | RKB MT | Füllstoff MT |
|---|---|---|---|---|---|
| 1 | 100 | 100 | 250 | 6,75 $BCl_3$ · DMBA | 836 |
| 2 | 100 | 100 | 250 | 4,5 Cyanoethyl-2-phenylimidazol | 836 |
| 3 | 50 | 100 | 164 | 4,85 $BCl_3$ · DMBA | 602 |

Tabelle 2

Thermisch-mechanische Eigenschaften der OX/ICR-Formstoffe

| Beispiel | SZ $\frac{Nmm}{mm^2}$ | BF $\frac{N}{mm^2}$ | $T_M$ °C |
|---|---|---|---|
| 1 | 14±3 | 132± 8 | 215 |
| 2 | 11±2 | 108±15 | 213 |
| 3 | 10±1 | 80± 3 | 172 |

Beispiele 4 und 5

Ein Novolak-Epoxidharz (Harz C, Ep-Wert = $0,56 \frac{mol}{100\ g}$, $\eta_{70°C}$ = 5000 mPa · s) wird zusammen mit einem Polyoxypropylenglykolbisglycidylether (Harz D, Ep-Wert = $0,53 \frac{mol}{100\ g}$, $\eta_{25°C}$ = 80 mPa · s), einem bei Raumtemperatur flüssigen Isomerengemisch von Diisocyanatodiphenylmethan (MDI) und 65% Quarzmehl analog den Beispielen 1 bis 3 aufbereitet und in Gegenwart eines Reaktionsbeschleunigers (RKB) zu Formstoffen verarbeitet. Die Zusammensetzung der Reaktionsharzmischungen ist aus Tabelle 3 ersichtlich. Wie in den Beispielen 1 bis 3 beschrieben, wurden an den gehärteten Formstoffen die thermisch-mechanischen Eigenschaften gemessen, sie sind in Tabelle 4 zusammengestellt.

Tabelle 3

Zusammensetzung der Reaktionsharzmischungen (MT = Masseteile)

| Beispiel | Harz C MT | Harz D MT | MDI MT | RKB MT | Füllstoff MT |
|---|---|---|---|---|---|
| 4 | 100 | 100 | 372 | 8,6 $BCl_3 \cdot$ DMBA | 1060 |
| 5 | 100 | 100 | 372 | 5,7 Cyanoethyl-2-phenylimidazol | 1060 |

Tabelle 4

Thermisch-mechanische Eigenschaften der OX/ICR-Formstoffe

| Beispiel | SZ $\dfrac{Nmm}{mm^2}$ | BF $\dfrac{N}{mm^2}$ | $T_M$ °C |
|---|---|---|---|
| 4 | $12 \pm 1$ | $114 \pm 1$ | 225 |
| 5 | $14 \pm 1$ | $143 \pm 12$ | 228 |

Beispiele 6 bis 8

Ein Bisphenol-F-bisglycidylether (Harz E, Ep-Wert = 0,62 $\dfrac{mol}{100\ g}$, $\eta_{50°C}$ = 1100 mPa · s) wird zusammen mit einem Polyoxybutylenglykolbisglycidylether (Harz B) und einem bei Raumtemperatur flüssigen Isomerengemisch von Diisocyanatodiphenylmethan (MDI) sowie 65% Quarzmehl analog den Beispielen 1 bis 3 aufbereitet und in Gegenwart eines Reaktionsbeschleunigers (RKB) zu Formstoffen verarbeitet. Die Zusammensetzung der Reaktionsharzmischungen ist in Tabelle 5 angegeben. Wie in den Beispielen 1 bis 3 beschrieben, wurden an den gehärteten Formstoffen die thermisch-mechanischen Eigenschaften gemessen, sie sind in Tabelle 6 zusammengestellt.

Tabelle 5

Zusammensetzung der Reaktionsharzmischungen (MT = Masseteile)

| Beispiel | Harz E MT | Harz B MT | MDI MT | RKB MT | Füllstoff MT |
|---|---|---|---|---|---|
| 6 | 100 | 100 | 290 | 7,4 $BCl_3 \cdot$ DMBA | 910 |
| 7 | 100 | 100 | 290 | 4,9 Cyanoethyl-2-phenylimidazol | 910 |
| 8 | 100 | 50 | 248 | 6,0 $BCl_3 \cdot$ DMBA | 739 |

Tabelle 6

Thermisch-mechanische Eigenschaften der OX/ICR-Formstoffe

| Beispiel | SZ $\dfrac{Nmm}{mm^2}$ | BF $\dfrac{N}{mm^2}$ | $T_M$ °C |
|---|---|---|---|
| 6 | $12 \pm 2$ | $104 \pm 10$ | 228 |
| 7 | $13 \pm 1$ | $120 \pm 4$ | 215 |
| 8 | $11 \pm 1$ | $118 \pm 6$ | 224 |

Vergleichsbeispiele 1 und 2

Ein Bisphenol-F-bisglycidylether (Harz E) wird zusammen mit einem bei Raumtemperatur flüssigen Isomerengemisch von Diisocyanatodiphenylmethan (MDI) und 65% Quarzmehl als Füllstoff, wie in den Beispielen 1 bis 3 beschrieben, aufbereitet und in Gegenwart eines Reaktionsbeschleunigers (RKB) zu Formstoffen verarbeitet.

Tabelle 7

Zusammensetzung der Reaktionsharzmischungen (MT = Masseteile)

| Vergleichs- beispiel | Harz E MT | MDI MT | RKB MT | Füllstoff MT |
|---|---|---|---|---|
| 1 | 100 | 156 | 3,8 BCl$_3$ · DMBA | 472 |
| 2 | 100 | 156 | 2,5 Cyanoethyl-2-phenylimidazol | 472 |

Tabelle 8

Thermisch-mechanische Eigenschaften der OX/ICR-Formstoffe

| Vergleichs- beispiel | SZ $\dfrac{Nmm}{mm^2}$ | BF $\dfrac{N}{mm^2}$ | T$_M$ °C |
|---|---|---|---|
| 1 | 9 | 108 | 209 |
| 2 | 10 | 112 | 202 |

Beispiel 9

Modelloberspannungswicklungen für Trockentransformatoren wurden aus Polyimidfolie (25 μm dick, 56 mm breit) als Lagenisolierung und Aluminiumbändern (0,1 mm dick, 50 mm breit) hergestellt und daraus Modellspulen, bestehend aus 4 Wicklungen, in einer Gießform aufgebaut. Die mit den erfindungsgemäßen Reaktionsharzmischungen zu vergießenden Zwischenräume zwischen den einzelnen Spulen sowie zwischen den Spulen und der Gießformwand betrugen 6 bis 8 mm, am Einguß ca. 15 mm. Die Modellspulen wurden mit der in Beispiel 1 beschriebenen Harzmischung, nach der ebenfalls in Beispiel 1 beschriebenen Aufbereitung, im Vakuum vergossen und anschließend wurde das Gießharz während ca. 90 min bei 130 bis 140 °C unter Überdruck mittels Wicklungsheizung geliert. Die Modellspulen wurden dann entformt und sofort 6 h bei 150 °C und weitere 15 h bei 200 °C getempert. Auf diese Weise hergestellte Modellspulen überstehen ohne Rißbildung Temperaturcyclen von +200 °C bis −70 °C.

Vergleichsbeispiel 3

Modellspulen wurden wie in Beispiel 9 beschrieben aufgebaut und mit der in Vergleichsbeispiel 1 beschriebenen Harzmischung, die wie in den Beispielen 1 bis 3 beschrieben aufbereitet wurde, im Vakuum vergossen. Das Gießharz wurde anschließend während ca. 90 min bei 130 bis 140 °C unter Überdruck mittels Wicklungsheizung geliert. Die Modellspulen wurden dann entformt und sofort 6 h bei 150 °C und weitere 15 h bei 200 °C getempert. Beim Abkühlen auf Raumtemperatur rissen die Modellspulen an mehreren Stellen entlang dem Außenumfang.

**Patentansprüche**

1. Hitzehärtbare Reaktionsharzmischungen, enthaltend
   a) polyfunktionelle Epoxide
   b) polyfunktionelle Isocyanate und
   c) einen Reaktionsbeschleuniger sowie gegebenenfalls
   d) übliche Additive und/oder Füllstoffe,
   dadurch gekennzeichnet, daß sie Gemische von Polyoxyalkylenglykolpolyglycidylethern mit anderen polyfunktionellen Epoxiden enthalten.

2. Reaktionsharzmischungen nach Anspruch 1, dadurch gekennzeichnet, daß sie durch Glycidylisierung copolymerer Polyoxyalkylenglykole erhaltene Polyoxyalkylenglykolpolyglycidylether enthalten.

3. Reaktionsharzmischungen nach Anspruch 1 oder 2, dadurch gekennzeichnet, daß sie Polyoxyalkylenglykolpolyglycidylether mit einer mittleren Molmasse von 400 bis 2000, vorzugsweise von 600 bis 1200, enthalten.

4. Reaktionsharzmischungen nach einem der Ansprüche 1 bis 3, dadurch gekennzeichnet, daß die Gemische polyfunktioneller Epoxide 10 bis 60 Gew.-%, vorzugsweise 20 bis 50 Gew.-%, Polyoxyalkylenglykolpolyglycidylether enthalten.

5. Reaktionsharzmischungen nach einem oder mehreren der Ansprüche 1 bis 4, dadurch gekennzeichnet, daß sie als Polyoxyalkylenglykolpolyglycidylether Polyoxybutylenglykolbisglycidylether enthalten.

6. Reaktionsharzmischungen nach einem oder mehreren der Ansprüche 1 bis 5, dadurch gekennzeichnet, daß sie einen latenten Reaktionsbeschleuniger enthalten.

7. Reaktionsharzmischungen nach einem oder mehreren der Ansprüche 1 bis 6, dadurch gekennzeichnet, daß sie bei Temperaturen von Raumtemperatur bis 220 °C vernetzt und gehärtet werden.

8. Reaktionsharzmischungen nach einem oder mehreren der Ansprüche 1 bis 7, dadurch gekennzeichnet, daß sie als Füllstoff Quarzmehl, Quarzgut, Aluminiumoxid oder Dolomit enthalten.

9. Verwendung der Reaktionsharzmischungen nach einem oder mehreren der Ansprüche 1 bis 8 zur Herstellung von Reaktionsharzformstoffen für elektrische und elektronische Geräte und Bauteile.

10. Verwendung der Reaktionsharzmischungen nach einem oder mehreren der Ansprüche 1 bis 8 zur Imprägnierung und Einbettung von elektrischen Wicklungen.

11. Verwendung der Reaktionsharzmischungen nach einem oder mehreren der Ansprüche 1 bis 8 zum Verguß und zur Umhüllung von elektronischen Bauteilen.

12. Verwendung der Reaktionsharzmischungen nach einem oder mehreren der Ansprüche 1 bis 8 zur Herstellung von Isolierbauteilen für die Schaltungs- und Energieübertragungstechnik.

## Claims

1. Thermosetting reaction resin mixtures comprising
   (a) polyfunctional epoxides,
   (b) polyfunctional isocyanates,
   (c) a reaction accelerator, and, if the case arises,
   (d) usual additives and/or fillers,
characterized in that they contain mixtures of polyoxyalkyleneglycol polyglycidyl ethers with other polyfunctional epoxides.

2. Reaction resin mixtures according to claim 1, characterized in that they contain polyoxyalkyleneglycol polyglycidyl ethers obtained by glycidylisation of copolymeric polyoxyalkylene glycols.

3. Reaction resin mixtures according to claim 1 or 2, characterized in that they contain polyoxyalkyleneglycol polyglycidyl ethers with an average molecular weight of 400 to 2000, preferably of 600 to 1200.

4. Reaction resin mixtures according to one of claims 1 to 3, characterized in that the mixtures of polyfunctional epoxides contain 10 to 60% by weight, preferably 20 to 50% by weight, polyoxyalkyleneglycol polyglycidyl ether.

5. Reaction resin mixtures according to one or several of claims 1 to 4, characterized in that they contain polyoxybutyleneglycol bisglycidyl ether as polyoxyalkyleneglycol polyglycidyl ether.

6. Reaction resin mixtures according to one or several of claims 1 to 5, characterized in that they contain a latent reaction accelerator.

7. Reaction resin mixtures according to one or several of claims 1 to 6, characterized in that they are cross-linked and cured at temperatures from ambient temperature to 220 °C.

8. Reaction resin mixtures according to one or several of claims 1 to 7, characterized in that as filler they contain quartz powder, fused quartz, aluminium oxide or dolomite.

9. Use of the reaction resin mixtures according to one or several of claims 1 to 8 for the manufacture of reaction resin moulded materials for electrical and electronic equipment and components.

10. Use of the reaction resin mixtures according to one or several of claims 1 to 8 to impregnate and embed electrical windings.

11. Use of the reaction resin mixtures according to one or several of claims 1 to 8 to cast and case electronic components.

12. Use of the reaction resin mixtures according to one or several of claims 1 to 8 to produce insulating components for switching technology and power transmission technology.

## Revendications

1. Compositions thermodurcissables de résines de réaction contenant
   a) des époxydes polyfonctionnels
   b) des isocyanates polyfonctionnels et
   c) un accélérateur de réaction ainsi que, le cas échéant,
   d) des additifs habituels et/ou des charges habituelles,
caractérisées en ce qu'elles contiennent des mélanges d'éthers polyglycidyliques de polyoxyalcoylèneglycol et d'autres époxydes polyfonctionnels.

2. Compositions de résines de réaction suivant la revendication 1, caractérisées en ce qu'elles contiennent des éthers polyglycidyliques de polyoxyalcoylèneglycol obtenus par glycidylisation de polyoxyalcoylèneglycols copolymères.

3. Compositions de résines de réaction suivant la revendication 1 ou 2, caractérisées en ce qu'elles contiennent des éthers polyglycidyliques de polyoxyalcoylèneglycol ayant une masse moléculaire moyenne de 400 à 2000 et, de préférence, de 600 à 1200.

4. Compositions de résines de réaction suivant l'une des revendications 1 à 3, caractérisées en ce que les mélanges d'époxydes polyfonctionnels contiennent de 10 à 60% en poids et, de préférence, de 20 à 50% en poids d'éther polyglycidylique de polyoxyalcoylèneglycol.

5. Compositions de résines de réaction suivant l'une ou plusieurs des revendications 1 à 4, caractérisées en ce qu'elles contiennent, comme éther polyglycidylique de polyoxyalcoylèneglycol, un éther bisglycidylique de polyoxybutylèneglycol.

6. Compositions de résines de réaction suivant l'une ou plusieurs des revendications 1 à 5, caractérisées en ce qu'elles contiennent un accélérateur latent de réaction.

7. Compositions de résines de réaction suivant l'une ou plusieurs des revendications 1 à 6, caractérisées en ce qu'elles sont réticulées et durcies à des températures allant de la température ambiante à 220 °C.

8. Compositions de résines de réaction suivant l'une ou plusieurs des revendications 1 à 7, caractérisées en ce qu'elles contiennent comme charge de la poudre de quartz, de la silice fondue, de l'oxyde d'aluminium ou de la dolomite.

9. Utilisation des compositions de résines de réaction suivant l'une ou plusieurs des revendications 1 à 8, pour la préparation de produits moulés de résines de réaction destinés à des appareils et à des composants électriques et électroniques.

10. Utilisation des compositions de résines de réaction suivant l'une ou plusieurs des revendications 1 à 8, pour l'imprégnation et l'enrobage d'enroulements électriques.

11. Utilisation des compositions de résines de réaction suivant l'une ou plusieurs des revendications 1 à 8, pour le scellement et l'enrobage de composants électroniques.

12. Utilisation des compositions de résines de réaction suivant l'une ou plusieurs des revendications 1 à 8, pour la fabrication d'éléments isolants pour la technique de la commutation et pour la technique du transport de l'énergie électrique.